# EUROPEAN PATENT SPECIFICATION

(11) **EP 3 878 325 B1**
(45) Date of publication and mention of the grant of the patent: **15.11.2023**
(21) Application number: 20180882.1
(22) Date of filing: 18.06.2020
(51) Int. Cl.: A47J 31/46

(54) **MACHINE FOR DISPENSING ESPRESSO COFFEE AND STEAM AND METHOD FOR CONTROLLING IT**
MASCHINE ZUR AUSGABE VON ESPRESSOKAFFEE UND DAMPF UND VERFAHREN ZUR STEUERUNG DIESER MASCHINE
MACHINE POUR LA DISTRIBUTION DE CAFÉ EXPRESSO ET DE VAPEUR ET SON PROCÉDÉ DE COMMANDE

(30) Priority: 10.03.2020 IT 202000005113
(43) Date of publication of application: 15.09.2021
(73) Proprietor: Rocket Milano S.r.L., 20060 Liscate (MI) (IT)
(72) Inventor: BERTI, Ennio, 20060 Liscate (MI) (IT); FERRETTI, Matteo, 20060 Liscate (MI) (IT)
(74) Representative: Cammareri, Emanuele

(56) References cited:
- EP-A1- 2 119 386
- EP-A1- 2 789 276
- WO-A1-2012/151629
- WO-A1-2016/087996

## Description

### TECHNICAL FIELD

The present invention relates to the sector of espresso coffee machines provided additionally with a circuit for steam delivery. In particular, the invention relates to an espresso coffee machine provided with a perfected steam delivery unit and to a method for controlling the espresso coffee machine for the optimized steam delivery.

### BACKGROUND ART

In the sector of espresso coffee machines, machines provided - in addition to the hydraulic circuit for extracting pressurized espresso coffee - with a steam delivery unit are known. In both domestic and professional settings, in fact, the use of steam delivered by the machine to heat drinks, such as water or milk, or to whip milk for the preparation of drinks such as cappuccino or latte macchiato is widespread.

The steam delivery units used in known machines for dispensing espresso coffee and steam usually comprise a steam boiler connected to a steam delivery wand through the interposition of a tap and a supply pipe which can be more or less long depending on the model of the machine. For example, machines of the under counter type, which - for reasons of size - make use of a boiler located below the plane on which the delivery taps are positioned, must necessarily use longer pipes.

The distance that the steam exiting the boiler must travel to reach the delivery wand generally causes an initial drop in the temperature of the steam and, consequently, the condensation thereof. The pipe and the tap are in fact at a temperature much lower than that of the steam, which therefore, passing through them, transfers them part of its own heat until the temperatures are balanced, bringing them to a temperature such that the steam can pass through them without condensing.

This results in an initial delay between when the tap controlling the steam delivery is opened and the delivery itself. Furthermore, in the first delivery instants, the release of condensed water from the delivery wand can be observed. Only in a second moment the delivery of steam starts, which at first, however, still appears whitish due to the presence of micro-particles of residual water in the delivered gas. Only in a third moment blue coloured steam is finally released, which is also referred to as "dry saturated steam", characterized by a temperature of at least 120°C.

The machines for dispensing espresso coffee and steam according to the state of the art therefore have the drawback of showing a marked delay in the delivery of steam which makes the use of the machine poorly suited to the typically requested delivery times, in particular in the professional settings.

Furthermore, the machines for dispensing espresso coffee and steam according to the state of the art have the further drawback of initially dispensing a not negligible quantity of condensed water into the liquid to be heated with consequent dilution of the latter. The above mentioned drawback is particularly significant, in the case in which the liquid subjected to heating consists of milk to give foamed milk. In fact, the dilution of the protein material contained in milk decreases the ability of the latter to form the foam.

In order to overcome these drawbacks, it is now known to use boilers sized in such a way as to overheat the steam, bringing it to a temperature of over 140°C. The sizing is chosen in such a way that the transfer of heat to the pipe and the tap before reaching the delivery wand is in any case not sufficient to cause the condensation of the steam.

This solution, although showing appreciable results when relatively short pipes are used, still has a residual delay in the delivery of dry saturated steam. Initially, wet steam is delivered which only after a few seconds turns into dry saturated steam. In addition, the state-of-the-art solution currently adopted is denoted by high consumption and important production costs of the machine, beside not being suitable for under counter solutions due to the length of the pipes used.

Document WO 2012/151629 A1 discloses a machine for dispensing espresso coffee and steam according to the preamble of claim 1.

The need is therefore felt for a machine for dispensing espresso coffee and steam whose realisation and controlling involves low costs, as well as minimizing the delay times in the delivery of dry saturated steam. In particular, the need for a solution that can be used in any type of machine is felt.

### OBJECTS AND SUMMARY OF THE INVENTION

A primary object of this invention is to overcome the drawbacks of the known art.

In particular, it is an object of the present invention to realise a machine for dispensing espresso coffee and steam which is capable of delivering dry saturated steam without significant delays with respect to the opening instant of the relative tap.

Another object of the present invention is to design a machine for dispensing espresso coffee and steam which is able to completely eliminate the initial delivery of condensate during the opening step of the tap for the delivery of steam.

A further object of the present invention is to devise a machine for dispensing espresso coffee and steam which entails low production and management costs.

Furthermore, the object of the present invention is to devise a method for controlling machines for dispensing espresso coffee and steam which allows to achieve all the above mentioned purposes with reference to the machine itself.

These and other objects of the present invention are achieved through a machine for dispensing espresso coffee and steam and a method for controlling it incorporating the characteristics of the appended claims, which form an integral part of the present description.

According to a first aspect thereof, the present invention therefore relates to a machine for dispensing espresso coffee and steam as defined in claim 1.

This solution advantageously allows to periodically let steam circulate in the supply pipe, therefore keeping it at a temperature constantly around the temperature of the steam. Therefore, when the tap is opened by an operator who wants to start the delivery of steam through the delivery wand, the steam will not be subject to heat transfer and/or condensation when passing through the pipe. The delivery of steam can therefore take place without delays and without the release of condensation water.

The solution devised by the Applicant solves a long-felt problem in a simple and effective way, greatly reducing the costs for realising the machine and the management costs of the same, by not using high-cost and/or high-consumption components.

According to a second aspect, the invention relates to a method for controlling a machine for dispensing espresso coffee and steam as defined in claim 6.

Advantageously the method for controlling a machine for dispensing espresso and steam thus implemented allows achieving the same advantages described with reference to the machine for dispensing espresso and steam according to the invention.

The present invention, in at least one of the aforesaid aspects, may have at least one of the following preferred features, taken individually or in combination with any other one of the preferred characteristics described.

Preferably, the temperature sensing element is a thermistor or NTC probe.

Advantageously, the temperature sensing element allows the processing unit to know the instant temperature of the tap and possibly, on the basis of this data, to control the opening of the shut-off means. In fact, the temperature of the tap is closely related to the temperature of the supply pipe to which the tap is directly connected.

Preferably, the second hydraulic circuit additionally comprises at least one heating element operatively connected to the processing unit and placed adjacent to the tap, the processing unit being configured to activate the heating element according to the temperature data received by the temperature sensing element.

More preferably, the heating element is an electrical resistance.

According to this preferred embodiment, when the tap temperature drops below a certain threshold value, it is possible to activate the heating element, for example by letting electric current run through it, if the heating element is an electric resistance, so as to heat the tap and therewith, by conduction, also the delivery wand. This prevents the steam, passing through the tap, from transferring part of its heat to it, thereby introducing a delay in the delivery of dry saturated steam.

In a variant of the invention, the drain pipe is connected to an expansion chamber.

Advantageously, this arrangement allows to prevent the generation of noise following the discharge of steam. The expansion chamber, acting as an outlet for the discharged steam and facilitating its condensation, acts therefore as a silencer.

In a variant of the invention, the shut-off means are configured to divert the flow from the supply pipe to the drain pipe near by or at the tap.

Advantageously, this makes it possible to act effectively on the entire supply pipe, heating it completely. Furthermore, part of the heat is transferred to the tap, also keeping this element at a temperature close to that of the steam.

In a variant of the invention, the machine comprises a first housing located below a support bench and a second housing located above the support bench, the water heating unit of the first hydraulic circuit for brewing coffee being located inside the second housing located above the support bench.

In this way, the water heating unit is advantageously located above the bench, making it more easily accessible for maintenance or repair.

Preferably, the threshold temperature Ts is comprised between 100°C and 140°C, more preferably between 105°C and 138°C, still more preferably between 110°C and 135°C.

Advantageously, when the tap temperature drops below a certain threshold value, the heating element is activated in such a way as to heat the tap and therewith, by conduction, also the delivery wand. This prevents the steam, passing through the tap, from transferring part of its heat to it, introducing a delay in the delivery of dry saturated steam.

In a variant of the invention, the control method provides that if the tap temperature is lower than a threshold temperature, the step for letting steam flow through the supply pipe is repeated.

In a variant of the invention, the control method provides that the step for letting steam flow through the supply pipe takes place for an opening time t₀ of at least 0.3 s, preferably equal to at least 0.5 s, more preferably equal to at least 1 s.

In a variant of the invention, the waiting time ta is comprised between 45 s and 200 s, preferably between 50 s and 175 s, more preferably between 60 s and 150 s.

These combinations of opening time and waiting time allow to optimize the machine management consumption, while guaranteeing that the parts crossed by steam remain at a temperature that is sufficient for preventing the formation of condensation and/or important delays in the delivery of saturated steam.

### BRIEF DESCRIPTION OF THE DRAWINGS

Further characteristics and advantages of the present invention will be more evident from the following description of some preferred embodiments thereof made with reference to the appended drawings.

In such drawings,
- Figure 1 is a schematic representation of a machine for dispensing espresso coffee and steam according to a first embodiment of the present invention, in particular of the under counter type;
- Figure 2 is a schematic representation of a circuit for the delivery of steam included in a machine for dispensing espresso coffee and steam according to a preferred embodiment of the present invention;
- Figure 3 is a schematic representation of a machine for dispensing espresso coffee and steam according to a second embodiment of the present invention;
- Figure 4 is a schematic representation of a machine for dispensing espresso coffee and steam according to a third embodiment of the present invention;
- Figure 5 is a block diagram of the method for controlling a machine for dispensing espresso coffee and steam according to the present invention.

### DETAILED DESCRIPTION OF THE INVENTION

While the invention is susceptible to various modifications and alternative constructions, certain preferred embodiments are shown in the drawings and are described hereinbelow in detail. However, it is to be understood that there is no intention to limit the invention to the specific embodiment illustrated but, on the contrary, the invention intends to cover all the modifications, alternative and equivalent constructions that fall within the context of the invention as defined in the claims.

In the following description, for the illustration of the figures, identical numbers or reference symbols are used to indicate construction elements with the same function. Further, for illustration clarity, some references may not be repeated in all the figures.

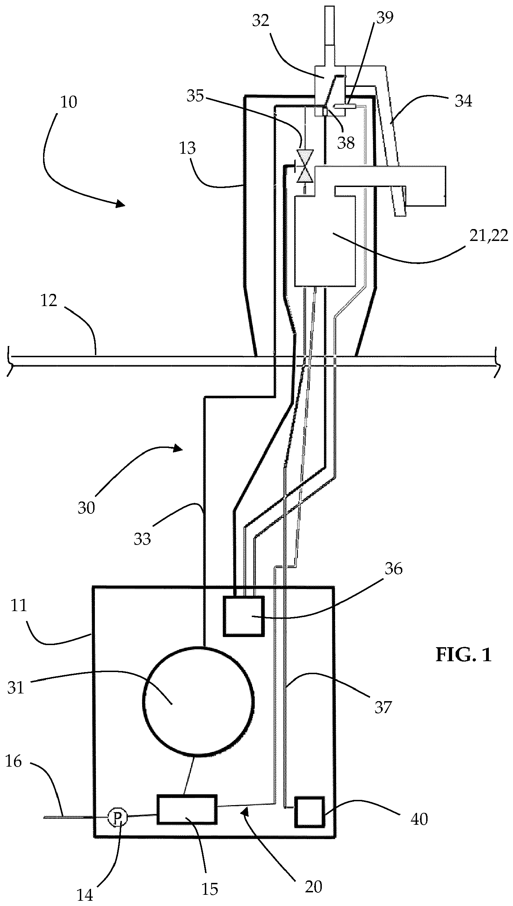

With reference to Figure 1, a first embodiment of a machine for dispensing espresso coffee and steam according to the present invention is shown, indicated as a whole with 10.

The machine for dispensing espresso coffee and steam 10, hereafter referred to as the "coffee machine" for the sake of brevity, shown in Figure 1, is of the under counter type, comprising a first housing 11 located below a support bench 12 and a second housing 13 located above the bench 12.

The coffee machine 10 comprises a first hydraulic circuit 20 for dispensing coffee and a second hydraulic circuit 30 for steam supply, both supplied through a same hydraulic pump 14 comprising an inlet for the supply of water 16. The hydraulic pump 14 is connected at the outlet to a distribution box 15 which distributes the water supplied by the pump 14 at the inlet to the two hydraulic circuits 20,30. Equally, the two hydraulic circuits could be connected to two different hydraulic pumps.

The first hydraulic circuit 20 comprises a unit 22 for heating the water necessary for dispensing espresso coffee supplied at the inlet by the hydraulic pump 14. The water heating unit 22 can be made in the form of a boiler or as a heat exchanger inside a boiler. It is advantageously placed inside an espresso coffee dispensing unit 21 which, in the embodiment of Figure 1, is positioned inside the second housing 13. In this way, the water heating unit 22 is advantageously located above the bench 12, making it more easily accessible for maintenance or repair.

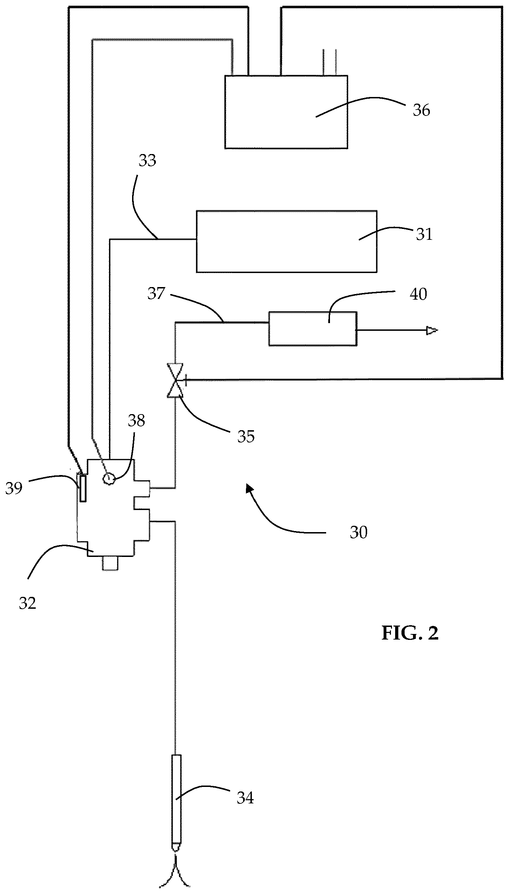

The second hydraulic circuit 30, illustrated in greater detail in Figure 2, comprises a steam boiler 31 supplied at the inlet by the hydraulic pump 14 and connected at the outlet to a tap 32 for opening and closing the steam discharge through a supply pipe 33. The tap 32 is in turn connected downstream to a steam delivery wand 34.

According to the present invention, the second hydraulic circuit 30 comprises shut-off means 35, such as for example a solenoid valve, located along the supply pipe 33 and preferably near the tap 32, and a processing unit 36 configured to periodically control the shut-off means 35 during opening and closing. The shut-off means 35 are also connected to a drain pipe 37, preferably leading to an expansion chamber 40.

The periodic opening of the shut-off means 35 causes a repeated circulation of steam inside the supply pipe 33, until it almost reaches the tap 32, to then divert the steam towards the drain pipe 37. In this way it is possible to keep the temperature of the supply pipe 33 at a temperature that is substantially comparable to that of the steam generated by the boiler 31.

Furthermore, for the tap 32 to be also kept at a temperature that is substantially comparable to that of the steam, for example a temperature of about 100°C, a heating element 39 is preferably provided, such as for example an electric resistance, placed in contact with the tap 32 and controlled through the processing unit 36.

For this purpose, a temperature sensing element 38 is provided, such as for example a thermistor or NTC probe, placed in contact with the tap 32, and connected to the processing unit 36 to provide a measurement value of the instant temperature of the tap 32. If the temperature of the tap 32 drops below a certain threshold value, the processing unit 36 controls the passage of a current through the resistance 39, leading it to generate heat and transfer it to the tap 32.

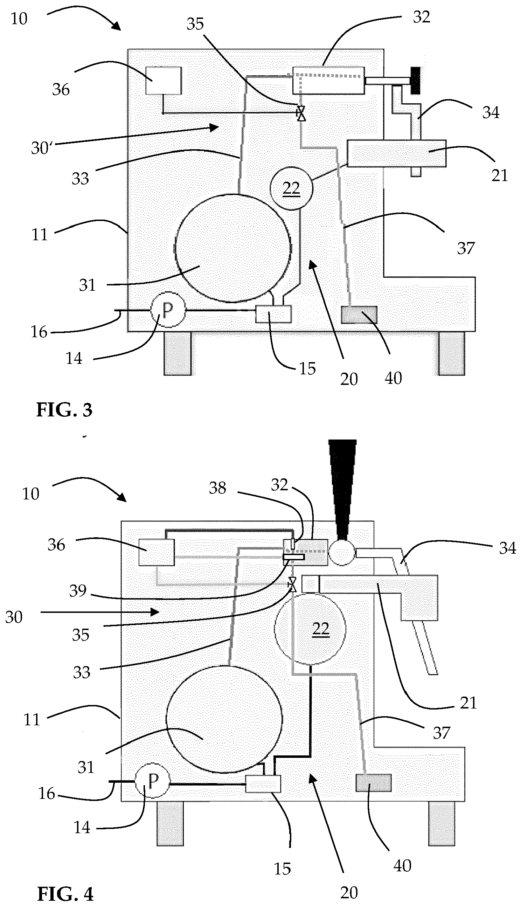

With reference to Figure 3, a second embodiment of a coffee machine 10 according to the present invention is illustrated which, unlike the first embodiment, is a machine of the compact type, that is, entirely contained within a single housing 11 that can be placed above a bench.

Also in this case the coffee machine 10 comprises a first hydraulic circuit 20 for dispensing coffee and a second hydraulic circuit 30 for steam supply, connected to the same hydraulic pump 14 by interposition of a distribution box 15.

The first hydraulic circuit 20 comprises a unit 22 for heating the water necessary for dispensing espresso coffee supplied at the inlet by the hydraulic pump 14. The water heating unit 22 is connected to an espresso coffee dispensing unit 21.

The second hydraulic circuit 30' comprises a steam boiler 31 supplied at the inlet by the hydraulic pump 14 and connected at the outlet to a tap 32 for opening and closing the steam discharge through a supply pipe 33. In the embodiment of Figure 3, the tap 32 is of the knob type and is in turn connected downstream to a steam delivery wand 34.

Unlike the second hydraulic circuit 30 of the coffee machine 10 of Figure 1, to ensure an immediate release of dry saturated steam, the second hydraulic circuit 30' of the coffee machine 10 of Figure 3 comprises only the shut-off means 35 located along the supply pipe 33 near the tap 32, and the processing unit 36 configured to periodically control the shut-off means 35 during opening and closing. The shut-off means 35 are also in this case connected to a drain pipe 37 to divert the exiting steam. Also in the coffee machine of Figure 3, the drain pipe 37 leads to an expansion chamber 40.

In particular, in the coffee machine 10 of Figure 3, the shut-off means are placed at a section of the supply pipe 33 partially housed in the tap 32 (as better illustrated by means of a dotted line), so that the passage of steam through the supply pipe 33 causes the heating of also tap 32.

Although not illustrated, the coffee machine 10 of Figure 3 additionally comprises a temperature sensing element 38 placed in contact with the tap 32, and connected to the processing unit 36 to provide a measurement value of the instant temperature of the tap 32, on the basis of which it can eventually control the opening of the shut-off means 35.

With reference to Figure 4, a third embodiment of a coffee machine 10 according to the present invention of the compact type is illustrated, similarly to the embodiment of Figure 3.

Like in the previous embodiments, the coffee machine 10 of Figure 4 comprises a first hydraulic circuit 20 for dispensing coffee and a second hydraulic circuit 30 for steam supply, specifically connected to the same hydraulic pump 14.

In particular, the second hydraulic circuit 30 comprises a steam boiler 31 supplied at the inlet by the hydraulic pump 14 and connected at the outlet to a tap 32 for opening and closing the steam discharge through a supply pipe 33. In the embodiment of Figure 4, the tap 32 is of the lever type and is in turn connected downstream to a steam delivery wand 34.

Similarly to the second hydraulic circuit 30 of the coffee machine 10 of Figure 1, the second hydraulic circuit 30 of the coffee machine 10 of Figure 4 comprises the shut-off means 35 located along the supply pipe 33 near the tap 32 and the processing unit 36 configured to periodically control the shut-off means 35 during opening and closing, as well as the heating element 39 placed in contact with the tap 32 and controlled through the processing unit 36 on the basis of the temperature values detected by the temperature sensing element 38.

In particular, like in the coffee machine 10 of Figure 3, the shut-off means are placed at a section of the supply pipe 33 partially housed in the tap 32 (as better illustrated by means of a dotted line).

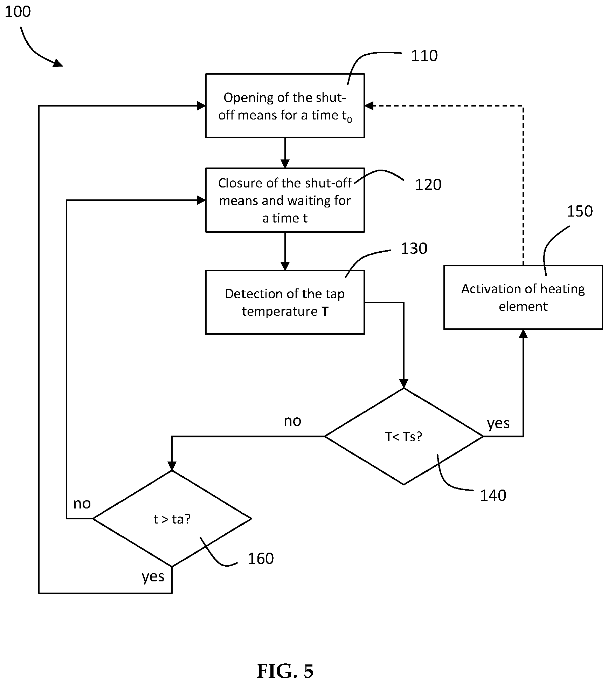

The operation 100 of the machine for dispensing espresso coffee and steam 10 according to the present invention is schematically described in Figure 5.

Initially there is a step 110 for opening the shut-off means 35 through a command given by the processing unit 36. This allows the steam to flow from the boiler 31 along the supply pipe 33, to then be diverted by the shut-off means 35 to the drain pipe 37 and, if present, to flow into the expansion chamber 40. Preferably, the shut-off means 35 are maintained open for an opening time t₀ preferably of at least 0.3s, more preferably equal to at least 0.5s, still more preferably equal to at least 1 second, such as for example 4s.

In this way, the section of supply pipe 33 crossed by steam is brought substantially to the same temperature as the steam, thus preventing a subsequent passage of steam inside the supply pipe 33 from causing condensation.

In a subsequent step 120, the processing unit 36 closes the shut-off means 35 and waits for a predetermined waiting time tₐ preferably comprised between 45s and 200s, more preferably comprised between 50s and 175s, even more preferably comprised between 60s and 150s, then moves on to repeat the opening and closing of the shut-off means 35.

Since the coffee machine 10 is additionally provided with a temperature sensing element 38 of the tap 32, in parallel thereto a step 130 of periodic sensing of temperature T of the tap 32 takes place. In particular, it is measured whether the tap temperature is lower than a threshold temperature Tₛ, for example comprised between 100 °C and 140 °C, more preferably comprised between 105°C and 138°C, even more preferably comprised between 110°C and 135°C.

If the sensed temperature is lower than the threshold temperature Tₛ (decision block 140), the processing unit 36 activates the heating element 39 (step 150) and possibly anticipates the reopening of the shut-off means 35. The heating element 39 is maintained active until the tap 32 reaches a maximum temperature Tₘₐₓ, such as for example 150 °C, which ensures that the tap is kept above the threshold temperature Tₛ for a reasonable amount of time. The maximum temperature Tₘₐₓ is preferably selected in such a way as to optimize the consumption of the heating element 39.

In any case, after the waiting time tₐ has elapsed (decision block 160), a renewed opening of the shut-off means 35 takes place in order to maintain the temperature of the supply pipe 33 around the temperature of the steam.

The invention thus conceived is susceptible to several modifications and variations, all falling within the scope of protection defined by the appended claims.

## Claims

1. Machine (10) for dispensing espresso coffee and steam comprising a first hydraulic circuit (20) for dispensing coffee comprising a water heating unit (22) and a second hydraulic circuit (30) for steam supply, the second hydraulic circuit (30) comprising at least one steam boiler (31) connected downstream to at least one tap (32) for controlled steam delivery, the steam boiler (31) being connected to the at least one tap (32) through a supply pipe (33), wherein the second hydraulic circuit (30) additionally comprises shut-off means (35) configured to selectively connect the supply pipe (33) with a drain pipe (37), and a processing unit (36) configured to control the shut-off means (35) during opening and closing,
**characterized in that** the second hydraulic circuit (30) additionally comprises a temperature sensing element (38) positioned so as to detect an instant temperature of the tap (32), the temperature sensing element (38) being operatively connected to the processing unit (36) for the transmission of detected temperature data.

2. Machine (10) according to claim 1, wherein the second hydraulic circuit (30) additionally comprises at least one heating element (39) operatively connected to the processing unit (36) and placed adjacent to the tap (32), the processing unit (36) being configured to activate the heating element (39) according to the temperature data received by the temperature sensing element (38).

3. Machine (10) according to any one of the preceding claims, wherein the drain pipe (37) is connected to an expansion chamber (40).

4. Machine (10) according to any one of the preceding claims, wherein the shut-off means (35) are configured to divert the flow from the supply pipe (33) to the drain pipe (37) nearby or at the tap (32).

5. Machine (10) according to any one of the preceding claims, comprising a first housing (11) located below a support bench (12) and a second housing (13) located above the support bench (12) , the water heating unit (22) of the first hydraulic circuit (20) for brewing coffee being located inside the second housing (13) located above the support bench (12).

6. Method (100) for controlling a machine (10) for dispensing espresso coffee and steam according to any of the preceding claims comprising the steps of:
a. opening (110) the shut-off means (35) through a command given by the processing unit (36) to let steam flow from the steam boiler (31) through the supply pipe (33) and discharge it through the drain pipe (37);
b. waiting (120) a waiting time (tₐ);
c. after the waiting time (tₐ) has expired, repeating the opening step (110) of the shut-off means (35) to let steam flow through the supply pipe (33);
d. periodically detecting (130) a temperature data relative to the tap (32) temperature; and
e. if the tap temperature is lower than a threshold temperature (Tₛ), activating (150) a heating element (39).

7. Control method (100) according to claim 6, wherein if the tap temperature is lower than the threshold temperature (Tₛ), the opening step (110) of the shut-off means (35) is repeated to let steam flow through the supply pipe (33).

8. Control method (100) according to one of claims 6 or 7, wherein the opening step (110) of the shut-off means (35) for letting steam flow through the supply pipe (33) takes place for an opening time (t₀) equal to at least 0.3 s, preferably equal to at least 0.5 s, more preferably equal to at least 1 s.

9. Control method (100) according to one of claims 6 to 8, wherein the threshold temperature (Tₛ) is comprised between 100°C and 140°C, such as between 105°C and 138°C, or between 110°C and 135°C.

10. Control method (100) according to one of claims 6 to 9, wherein the waiting time (tₐ) is comprised between 45 s and 200 s, such as between 50 s and 175 s, or between 60 s and 150 s.

## Patentansprüche

1. Maschine (10) zur Ausgabe von Espresso-Kaffee und Dampf, die einen ersten Hydraulikkreislauf (20) zur Ausgabe von Kaffee mit einer Wasserheizeinheit (22) und einen zweiten Hydraulikkreislauf (30) zur Dampfzufuhr umfasst, wobei der zweite Hydraulikkreislauf (30) mindestens einen Dampfkessel (31) umfasst, der stromabwärts mit mindestens einem Hahn (32) zur gesteuerten Dampfausgabe verbunden ist, wobei der Dampfkessel (31) mit mindestens einem Hahn (32) über eine Zufuhrleitung (33) verbunden ist, wobei der zweite Hydraulikkreislauf (30) zusätzlich eine Absperrvorrichtung (35) umfasst, die so konfiguriert ist, dass sie die Zufuhrleitung (33) selektiv mit einer Ablaufleitung (37) verbindet, und eine Verarbeitungseinheit (36) umfasst, die so konfiguriert ist, dass sie die Absperrvorrichtung (35) während des Öffnens und Schließens steuert, **dadurch gekennzeichnet, dass** der zweite Hydraulikkreislauf (30) zusätzlich ein Temperaturerfassungselement (38) umfasst, das so positioniert ist, dass es die momentane Temperatur des Hahns (32) erfasst, wobei das Temperaturerfassungselement (38) funktionell mit der Verarbeitungseinheit (36) verbunden ist, um die erfassten Temperaturdaten zu übertragen.

2. Maschine (10) nach Anspruch 1, wobei der zweite Hydraulikkreislauf (30) zusätzlich mindestens ein Heizelement (39) umfasst, das betriebsmäßig mit der Verarbeitungseinheit (36) verbunden und in der Nähe des Hahns (32) angeordnet ist, wobei die Verarbeitungseinheit (36) so konfiguriert ist, dass sie das Heizelement (39) in Abhängigkeit von Temperaturdaten aktiviert, die von dem Temperatursensorelement (38) empfangen werden.

3. Maschine (10) nach einem der vorhergehenden Ansprüche, wobei die Ablaufleitung (37) mit einer Expansionskammer (40) verbunden ist.

4. Maschine (10) nach einem der vorhergehenden Ansprüche, wobei die Absperrvorrichtung (35) so konfiguriert ist, dass sie den Fluss von der Zufuhrleitung (33) zu der Ablaufleitung (37) in der Nähe oder an dem Hahn (32) umleitet.

5. Maschine (10) nach einem der vorhergehenden Ansprüche, mit einem ersten Gehäuse (11), das unterhalb einer Stützbank (12) angeordnet ist, und einem zweiten Gehäuse (13), das oberhalb der Stützbank (12) angeordnet ist, wobei die Wasserheizeinheit (22) des ersten Hydraulikkreislaufs (20) zum Brühen von Kaffee innerhalb des zweiten Gehäuses (13) angeordnet ist, das oberhalb der Stützbank (12) angeordnet ist.

6. Verfahren (100) zur Steuerung einer Maschine (10) zur Ausgabe von Espressokaffee und Dampf nach einem der vorhergehenden Ansprüche, das die folgenden Schritte umfasst:
a. Öffnung (110) der Absperrvorrichtung (35) durch einen Befehl der Verarbeitungseinheit (36), um den Dampf aus dem Dampfkessel (31) durch die Zufuhrleitung (33) strömen und durch die Ablaufleitung (37) abfließen zu lassen;
b. Abwarten (120) einer Wartezeit (tₐ);
c. nach Ablauf der Wartezeit (tₐ) Wiederholung des Öffnungsschritts (110) der Absperrvorrichtung (35), um Dampf durch die Zufuhrleitung (33) strömen zu lassen;
d. periodisches Erfassen (130) von Temperaturdaten in Bezug auf die Temperatur des Hahns (32); und
e. wenn die Temperatur der Zapfstelle unter einer Schwellentemperatur (Tₛ) liegt, Aktivierung (150) eines Heizelements (39).

7. Steuerverfahren (100) nach Anspruch 6, bei dem, wenn die Zapftemperatur unter der Schwellentemperatur (Tₛ) liegt, der Schritt des Öffnens (110) der Absperrvorrichtung (35) wiederholt wird, um Dampf durch die Zufuhrleitung (33) strömen zu lassen.

8. Steuerungsverfahren (100) nach einem der Ansprüche 6 oder 7, bei dem der Schritt des Öffnens (110) der Absperrvorrichtung (35), um Dampf durch die Zufuhrleitung (33) strömen zu lassen, für eine Öffnungszeit (t₀) von mindestens 0,3 s, vorzugsweise von mindestens 0,5 s, besonders bevorzugt von mindestens 1 s erfolgt.

9. Kontrollverfahren (100) nach einem der Ansprüche 6 bis 8, wobei die Schwellentemperatur (Tₛ) zwischen 100°C und 140°C, beispielsweise zwischen 105°C und 138°C, oder zwischen 110°C und 135°C liegt.

10. Steuerungsverfahren (100) nach einem der Ansprüche 6 bis 9, wobei die Wartezeit (tₐ,) zwischen 45 s und 200 s, beispielsweise zwischen 50 s und 175 s, oder zwischen 60 s und 150 s liegt.

## Revendications

1. Machine (10) pour la distribution de café expresso et de vapeur comprenant un premier circuit hydraulique (20) pour la distribution du café comprenant une unité de chauffage de l'eau (22) et un deuxième circuit hydraulique (30) pour l'alimentation en vapeur, le deuxième circuit hydraulique (30) comprenant au moins une chaudière à vapeur (31) reliée en aval à au moins un robinet (32) pour la distribution contrôlée de la vapeur, la chaudière à vapeur (31) étant reliée à l'au moins un robinet (32) par un tuyau d'alimentation (33), ledit deuxième circuit hydraulique (30) comprenant en outre des moyens de fermeture (35) configurés pour relier sélectivement le tuyau d'alimentation (33) à un tuyau d'évacuation (37), et une unité de traitement (36) configurée pour commander les moyens de fermeture (35) lors de l'ouverture et de la fermeture, **caractérisé en ce que** le deuxième circuit hydraulique (30) comprend en outre un élément de détection de température (38) positionné de manière à détecter une température instantanée du robinet (32), l'élément de détection de température (38) étant relié de manière opérationnelle à l'unité de traitement (36) pour la transmission des données de température détectées.

2. Machine (10) selon la revendication 1, **caractérisée en ce que** le deuxième circuit hydraulique (30) comprend en outre au moins un élément chauffant (39) fonctionnellement relié à l'unité de traitement (36) et placé à côté du robinet (32), l'unité de traitement (36) étant configurée pour activer l'élément chauffant (39) en fonction des données de température reçues par l'élément de détection de température (38).

3. Machine (10) selon l'une quelconque des revendications précédentes, **caractérisée en ce que** le tuyau d'évacuation (37) est relié à une chambre d'expansion (40).

4. Machine (10) selon l'une quelconque des revendications précédentes, **caractérisée en ce que** les moyens de fermeture (35) sont configurés pour dévier le flux du tuyau d'alimentation (33) vers le tuyau d'évacuation (37) à proximité du robinet (32) ou au niveau de ce dernier.

5. Machine (10) selon l'une quelconque des revendications précédentes, comprenant un premier logement (11) situé sous un banc de support (12) et un deuxième logement (13) situé au-dessus du banc de support (12), l'unité de chauffage de l'eau (22) du premier circuit hydraulique (20) pour l'infusion du café étant située à l'intérieur du deuxième logement (13) situé au-dessus du banc de support (12).

6. Procédé (100) de commande d'une machine (10) de distribution de café expresso et de vapeur selon l'une quelconque des revendications précédentes comprenant les étapes consistant à :
a. ouvrir (110) le moyen de fermeture (35) par une commande donnée par l'unité de traitement (36) pour laisser la vapeur s'écouler de la chaudière à vapeur (31) par le tuyau d'alimentation (33) et l'évacuer par le tuyau d'évacuation (37) ;
b. attendre (120) un temps d'attente (tₐ) ;
c. après l'expiration du temps d'attente (tₐ), répéter l'étape d'ouverture (110) des moyens de fermeture (35) pour laisser la vapeur s'écouler par le tuyau d'alimentation (33) ;
d. détecter périodiquement (130) une donnée de température relative à la température du robinet (32) ; et
e. si la température du robinet est inférieure à une température seuil (Tₛ), activer (150) un élément chauffant (39).

7. Procédé de commande (100) selon la revendication 6, **caractérisé en ce que** si la température du robinet est inférieure à la température seuil (Tₛ), l'étape d'ouverture (110) du moyen de fermeture (35) est répétée pour permettre à la vapeur de s'écouler par le tuyau d'alimentation (33).

8. Procédé de commande (100) selon l'une des revendications 6 ou 7, **caractérisé en ce que** l'étape d'ouverture (110) du moyen de fermeture (35) pour laisser s'écouler la vapeur dans le tuyau d'alimentation (33) a lieu pendant un temps d'ouverture (tₒ) égal à au moins 0,3 s, de préférence égal à au moins 0,5 s, et plus préférentiellement égal à au moins 1 s.

9. Procédé de commande (100) selon l'une des revendications 6 à 8, **caractérisé en ce que** la température seuil (Tₛ) est comprise entre 100 °C et 140 °C, par exemple entre 105 °C et 138 °C, ou entre 110 °C et 135 °C.

10. Procédé de commande (100) selon l'une des revendications 6 à 9, **caractérisé en ce que** le temps d'attente (tₐ) est compris entre 45 s et 200 s, par exemple entre 50 s et 175 s, ou entre 60 s et 150 s.
